# EUROPEAN PATENT APPLICATION

(11) **EP 4 779 318 A1**
(43) Date of publication of application: **22.07.2026**
(21) Application number: 24865059.0
(22) Date of filing: 11.07.2024
(51) Int. Cl.: G01N 35/10

(54) **AUTOMATED ANALYSIS DEVICE, AND METHOD FOR ADJUSTING AUTOMATED ANALYSIS DEVICE**

(30) Priority: 13.09.2023 JP 2023148381
(71) Applicant: Hitachi High-Tech Corporation, Minato-ku Tokyo 105-6409 (JP)
(72) Inventor: SHOJI Takuya, Tokyo 105-6409 (JP); TAKAHASHI Takuya, Tokyo 105-6409 (JP); NAKAJIMA Satoshi, Tokyo 105-6409 (JP); YOKOTA Koki, Tokyo 105-6409 (JP)
(74) Representative: MERH-IP Matias Erny Reichl Hoffmann Patentanwälte PartG mbB
(86) International application number: PCT/JP2024/025150
(87) International publication number: WO 2025/057552

(57) **Abstract**

The invention includes: a flow rate adjustment unit configured to adjust a liquid amount of a probe cleaner discharged from a cleaning nozzle 202 configured to discharge the probe cleaner to an outer wall of a sample dispensing probe 111b; a liquid level detector 210 configured to measure a capacitance of the sample dispensing probe 111b; and a controller 118 configured to obtain height information of an upper surface of the probe cleaner based on data of the capacitance measured by the liquid level detector 210 at a horizontal position in a cleaning position where the sample dispensing probe 111b is to be cleaned, obtain a cleaning range of the sample dispensing probe 111b at the horizontal position based on the height information of the upper surface of the probe cleaner, and determine, based on the obtained cleaning range, whether it is necessary to adjust the liquid amount of the probe cleaner by the flow rate adjustment unit.

## Description

### Technical Field

The present invention relates to an automatic analyzer that executes a qualitative and quantitative analysis on a biological sample such as blood or urine, and a method for adjusting the automatic analyzer.

### Background Art

PTL 1 discloses that "a discharge state of a probe cleaner flow is determined using a liquid level detection function of a nozzle at two horizontal positions" (abstract).

### Citation List

### Patent Literature

PTL 1: WO2022/255042

### Summary of Invention

### Technical Problem

An automatic analyzer executes a qualitative and quantitative analysis on a specific component contained in a biological sample such as blood or urine. As a general operation, a sample is dispensed from a sample container to a reaction container using a dispensing probe, then a reagent is dispensed from a reagent container to the reaction container using a dispensing probe, stirring is executed, a reaction is executed for a certain period of time, and concentration calculation of a target item is executed based on information such as absorbance or a light emission amount obtained from a reaction liquid.

In such an automatic analyzer, in order to execute an accurate measurement, it is necessary to clean a dispensing probe that aspirates a sample and a reagent in an appropriate cleaning range.

However, when the performance of a pump that supplies a probe cleaner for cleaning a dispensing probe deteriorates due to aging or a flow path from the pump to a discharge port of the probe cleaner is clogged, a liquid flow of the probe cleaner changes.

When a cleaning range is small, the probe cannot be sufficiently cleaned, and the sample or the reagent may be brought from the dispensing probe into a cell. In order to cope with such a decrease in the cleaning range caused by a decrease in an amount of cleaning water, in general, an operator executes maintenance to adjust a liquid amount of a probe cleaner periodically, but the decrease in the cleaning range may not be noticed, or even if noticed, it takes time to execute a manual adjustment, or variation occurs.

Here, for example, PTL 1 is known as a technique for checking the liquid amount of the probe cleaner. In the technique described in PTL 1, a change in a liquid flow state is detected at two horizontal positions by the dispensing probe.

Here, in cleaning in which the probe cleaner is obliquely discharged from a cleaning nozzle, it is possible to detect a change in a liquid flow. However, it is not possible to cope with a machine difference in an inclination of the cleaning nozzle and the like. For example, there is a device in which an amount of cleaning water is sufficient and a probe can be cleaned, but an inclination of a probe cleaner is steep due to a manufacturing error or arrangement of a flow path. The technique described in PTL 1 may not be able to cope with the above-described machine difference such as the manufacturing error, and it has been found that there is room for more appropriate checking and adjustment of the water amount.

The invention has been made in view of the above-described problems, and an object of the invention is to provide an automatic analyzer and a method for adjusting the automatic analyzer, which can ensure a cleaning range without being affected by a machine difference.

### Solution to Problem

The invention includes a plurality of means for solving the above-described problems, and an example thereof includes: a dispensing probe configured to dispense a liquid; a cleaning nozzle configured to discharge a probe cleaner to an outer wall of the dispensing probe; a flow rate adjustment unit configured to adjust a liquid amount of the probe cleaner discharged from the cleaning nozzle; a capacitance measurement unit configured to measure a capacitance of the dispensing probe; and a control unit, in which the control unit obtains height information of an upper surface of the probe cleaner based on data of the capacitance measured by the capacitance measurement unit at a horizontal position in a cleaning position where the dispensing probe is to be cleaned, obtains a cleaning range of the dispensing probe at the horizontal position based on the height information of the upper surface of the probe cleaner, and determines, based on the obtained cleaning range, whether it is necessary to adjust the liquid amount of the probe cleaner by the flow rate adjustment unit.

### Advantageous Effects of Invention

According to the invention, the cleaning range can be ensured without being affected by the machine difference. Problems, configurations, and effects other than those described above will be clarified by the description of the following embodiments.

### Brief Description of Drawings

[FIG. 1] FIG. 1 is a schematic configuration diagram of an automatic analyzer according to Embodiment 1.
[FIG. 2] FIG. 2 is a diagram illustrating a configuration of a sample dispensing mechanism of the automatic analyzer according to Embodiment 1.
[FIG. 3] FIG. 3 is a diagram illustrating a configuration example of a probe cleaner liquid amount adjustment unit of a sample dispensing probe of the automatic analyzer according to Embodiment 1.
[FIG. 4] FIG. 4 is a diagram illustrating a configuration of a control block for probe cleaning and a probe cleaner liquid amount adjustment in the automatic analyzer according to Embodiment 1.
[FIG. 5] FIG. 5 is a flowchart when acquiring a probe cleaner upper surface height in the automatic analyzer according to Embodiment 1.
[FIG. 6] FIG. 6 is a flowchart illustrating a method for checking and adjusting a cleaning range in the automatic analyzer according to Embodiment 1.
[FIG. 7] FIG. 7 is a diagram illustrating a threshold before smoothing in the automatic analyzer according to Embodiment 1.
[FIG. 8] FIG. 8 is a diagram illustrating a threshold after the smoothing in the automatic analyzer according to Embodiment 1.
[FIG. 9] FIG. 9 is a diagram illustrating examples of a height position of the sample dispensing probe in the automatic analyzer according to Embodiment 1.
[FIG. 10] FIG. 10 is a diagram illustrating a cleaning range checking height and a flow in each operation in an automatic analyzer according to Embodiment 2.

### Description of Embodiments

Hereinafter, embodiments of an automatic analyzer and a method for adjusting the automatic analyzer according to the invention will be described with reference to the drawings. In the drawings used in the present description, the same or corresponding components are denoted by the same or similar reference signs, and repeated descriptions of these components may be omitted.

### <Embodiment 1>

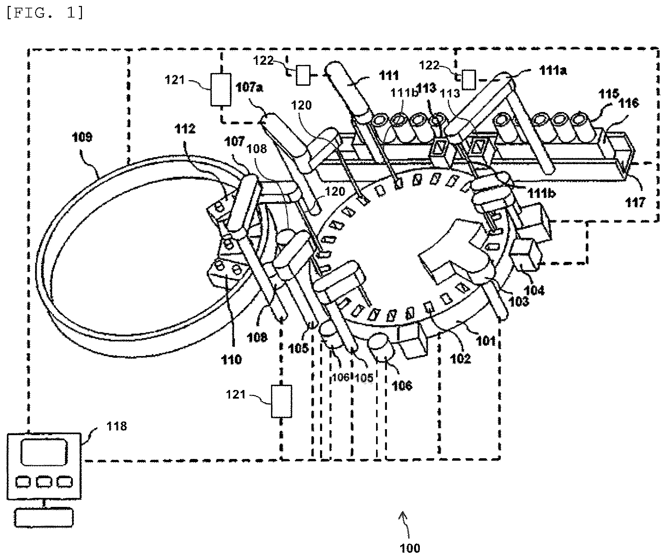

Embodiment 1 of the automatic analyzer and the method for adjusting the automatic analyzer according to the invention will be described with reference to FIGS. 1 to 9.

First, an overall configuration of the automatic analyzer and a configuration of each unit will be described in detail with reference to FIG. 1. FIG. 1 is a schematic configuration diagram of the automatic analyzer according to Embodiment 1.

An automatic analyzer 100 illustrated in FIG. 1 is a device that measures a reaction liquid subjected to a chemical reaction in a reaction container 102 and executes a component analysis.

The automatic analyzer 100 includes, as main configurations, a reaction disk 101, a cleaning mechanism 103, a spectrophotometer 104, stirring mechanisms 105, cleaning tanks 106, a first reagent dispensing mechanism 107, a second reagent dispensing mechanism 107a, cleaning tanks 108, a reagent disk 109, a first sample dispensing mechanism 111, a second sample dispensing mechanism 111a, cleaning tanks 113, a sample transport mechanism 117, and a controller 118.

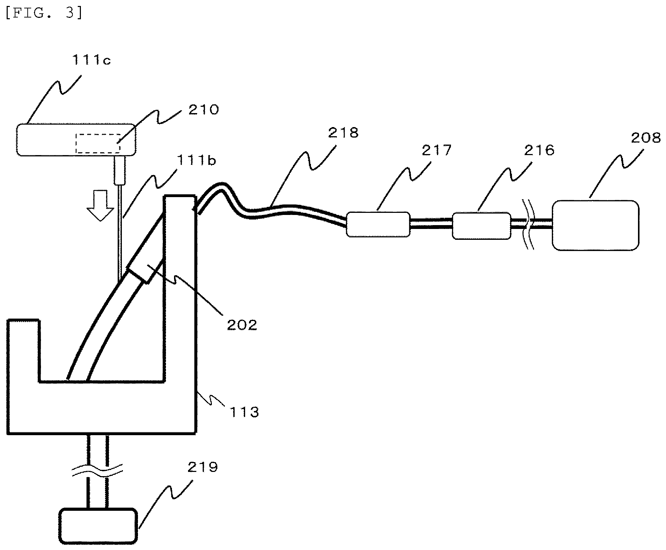

Among these configurations, the first reagent dispensing mechanism 107, the second reagent dispensing mechanism 107a, the first sample dispensing mechanism 111, and the second sample dispensing mechanism 111a each have a liquid level detector 210 (FIG. 3 and the like, details will be described later).

The reaction containers 102 are circumferentially arranged on the reaction disk 101. The reaction containers 102 are each a container for storing a mixed liquid obtained by mixing a sample and a reagent, and are arranged on the reaction disk 101. The sample transport mechanism 117 for transporting a sample rack 116 on which sample container 115 is mounted is disposed in the vicinity of the reaction disk 101.

The first sample dispensing mechanism 111 and the second sample dispensing mechanism 111a, which can rotate and vertically move, are disposed between the reaction disk 101 and the sample transport mechanism 117, and each includes a sample dispensing probe 111b. A sample syringe 122 is connected to each sample dispensing probe 111b. The sample dispensing probe 111b horizontally moves while drawing an arc around a rotation axis and vertically moves to dispense the sample from the sample container 115 to the reaction container 102.

The reagent disk 109 is a storage cabinet on which a plurality of reagent bottles 110 containing reagents therein, a plurality of detergent bottles 112, and the like can be placed on a circumference. The reagent disk 109 is kept cool.

The first reagent dispensing mechanism 107 and the second reagent dispensing mechanism 107a, which can rotate and vertically move, are provided between the reaction disk 101 and the reagent disk 109, and each includes a reagent dispensing probe 120.

The reagent dispensing probe 120 is vertically and horizontally moved by the first reagent dispensing mechanism 107 or the second reagent dispensing mechanism 107a. A reagent syringe 121 is connected to the reagent dispensing probe 120. The reagent syringe 121 dispenses the reagent, a detergent, a diluent, a pretreatment reagent, and the like respectively aspirated from the reagent bottle 110, the detergent bottle 112, a diluent bottle, a pretreatment reagent bottle, and the like into the reaction container 102 via the reagent dispensing probe 120.

Around the reaction disk 101, the cleaning mechanism 103 that cleans the inside of the reaction container 102, the spectrophotometer 104 that measures absorbance of light passing through the mixed liquid in the reaction container 102, the stirring mechanisms 105 that mix the sample and the reagent dispensed into the reaction container 102, and the like are disposed.

Further, the cleaning tank 108 for the reagent dispensing probe 120 is disposed in each of operation ranges of the first reagent dispensing mechanism 107 and the second reagent dispensing mechanism 107a, the cleaning tank 113 for the sample dispensing probe 111b is disposed in each of operation ranges of the first sample dispensing mechanism 111 and the second sample dispensing mechanism 111a, and the cleaning tank 106 for the stirring mechanism 105 is disposed in an operation range of each of the stirring mechanisms 105. The sample dispensing probe 111b is cleaned at a cleaning position of the cleaning tank 113 for the sample dispensing probe 111b. The cleaning position in the invention is a position where a cleaning operation for a dispensing probe in the cleaning tank is actually executed in an analysis operation of the automatic analyzer. In the present embodiment, as an example of the cleaning position, a position where both internal cleaning and external cleaning for the dispensing probe are executed will be described. A checking operation and an adjustment operation for a water amount are executed at a horizontal position of the cleaning position.

Each mechanism is connected to the controller 118, and an operation of each mechanism is controlled by the controller 118. The controller 118, which is a control unit, is implemented by a computer or the like, controls the operation of each mechanism described above in the automatic analyzer, and executes a calculation process for obtaining a concentration of a predetermined component in a liquid sample such as blood or urine.

An analysis process of a test sample executed by the above-described automatic analyzer 100 is executed in the following order.

First, the sample in the sample container 115 placed on the sample rack 116 transported near the reaction disk 101 by the sample transport mechanism 117 is dispensed into the reaction container 102 on the reaction disk 101 by the sample dispensing probe 111b of the first sample dispensing mechanism 111 or the second sample dispensing mechanism 111a.

Next, the reagent used for an analysis is dispensed, by the first reagent dispensing mechanism 107 or the second reagent dispensing mechanism 107a, from the reagent bottle 110 on the reagent disk 109 into the reaction container 102 into which the sample has been previously dispensed. Subsequently, the stirring mechanism 105 stirs the mixed liquid of the sample and the reagent in the reaction container 102.

Thereafter, light generated from a light source is transmitted through the reaction container 102 containing the mixed liquid, and a light intensity of transmitted light is measured by the spectrophotometer 104. The light intensity measured by the spectrophotometer 104 is transmitted to the controller 118 via an A/D converter and an interface (both of which are omitted for convenience of illustration). Then, the controller 118 executes calculation to obtain a concentration of a predetermined component in a liquid sample such as blood or urine, and displays a result on a display unit (not illustrated) or the like.

Although the automatic analyzer that obtains a concentration of a predetermined component using the spectrophotometer 104 will be described as an example, the analyzer is not limited to a biochemical analyzer, and may be an analyzer that analyzes other analysis items, such as an immune analyzer that analyzes immune analysis items. The biochemical analyzer is not limited to a form illustrated in FIG. 1, and may be equipped with a separate analyzer that measures other analysis items, for example, electrolytes.

Further, the automatic analyzer 100 is not limited to a form of a single analysis module configuration as illustrated in FIG. 1, and may be implemented such that two or more analysis modules capable of measuring various same or different analysis items or preprocessing modules for executing preprocessing are connected by a transport device.

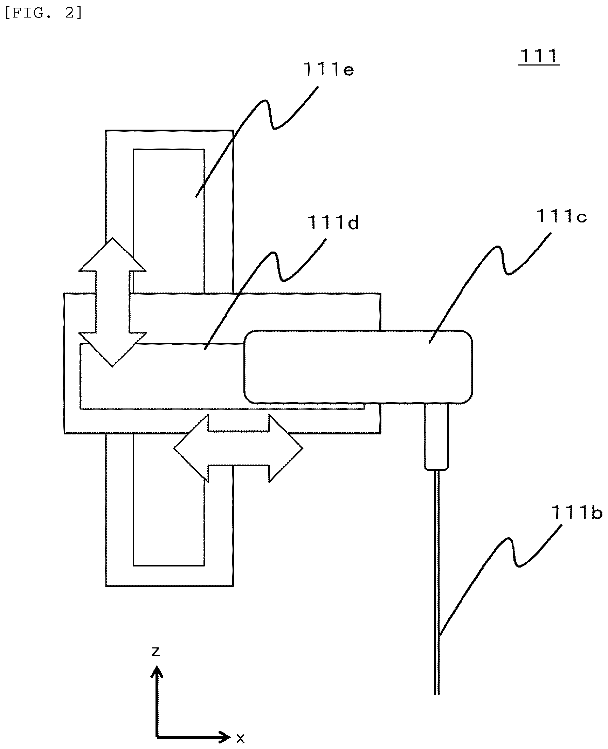

Next, a configuration of a sample dispensing mechanism will be described with reference to FIG. 2. FIG. 2 illustrates a configuration of the first sample dispensing mechanism 111, and the second sample dispensing mechanism 111a has the same configuration as that of the first sample dispensing mechanism 111, and thus the details thereof will be omitted. In addition to the sample dispensing mechanism, the first reagent dispensing mechanism 107 or the second reagent dispensing mechanism 107a also has the same configuration as that of the first sample dispensing mechanism 111, and thus the details thereof will be omitted.

As illustrated in FIG. 2, the sample dispensing mechanism includes a sample dispensing arm 111c including a sample dispensing probe 111b at its tip, a horizontal movement mechanism 111d that moves the sample dispensing arm 111c in a horizontal direction, a vertical movement mechanism 111e that moves the sample dispensing arm 111c in a vertical direction (Z direction), and a rotational movement mechanism (not illustrated) that rotates the sample dispensing arm 111c.

The sample dispensing mechanism moves, by these movement mechanisms, the sample dispensing probe 111b to an aspirating position at which the sample is aspirated from the sample container 115, a discharge position at which the aspirated sample is discharged to the reaction container 102, and a cleaning position at which a tip of the sample dispensing probe 111b is cleaned in the cleaning tank 113.

Further, the sample dispensing mechanism lowers the sample dispensing probe 111b (in the Z direction) in accordance with heights of the sample container 115, the reaction container 102, and the cleaning tank 113 at the aspirating position, the discharge position, and the cleaning position, respectively.

In the present embodiment, cleaning of the sample dispensing probe 111b will be described as an example, but the description can also be applied to cleaning of the reagent dispensing probe 120 that is the same mechanism as the sample dispensing probe 111b. The description can also be applied to an automatic analyzer including a mechanism that dispenses a sample and a reagent using one probe.

FIG. 3 is a diagram illustrating a configuration example for a probe cleaner liquid amount adjustment unit of the sample dispensing probe 111b. As illustrated in FIG. 3, the probe cleaner liquid amount adjustment unit includes a probe cleaner supply pump 208 that supplies a probe cleaner from a pure water facility (not illustrated), a solenoid valve 217 that turns liquid flow ON/OFF by opening/closing control, an adjustment valve 216 that can change an opening/closing state by a control current, a cleaning nozzle 202 that discharges the probe cleaner, a waste liquid tank 219 that stores waste liquid discharged from the cleaning tank 113, and a flow path 218 that connects the components.

In the sample dispensing arm 111c of the sample dispensing mechanism, a liquid level detector 210 implemented by, for example, a capacitance sensor is mounted and electrically connected to the controller 118 that executes smoothing.

In the cleaning of the sample dispensing probe 111b, the probe cleaner fed from the probe cleaner supply pump 208 is discharged from the cleaning nozzle 202 by opening the solenoid valve 217, and a liquid flow from the cleaning nozzle 202 comes into contact with an outer surface of the sample dispensing probe 111b, removing dirt adhered to the outer surface of the sample dispensing probe 111b.

In the present embodiment, an example is described in which the adjustment valve 216 is used as a flow rate adjustment unit that can adjust a liquid amount of the probe cleaner, and the liquid amount of the probe cleaner from one cleaning nozzle 202 is adjusted by one adjustment valve 216, but it is also possible to use one adjustment valve 216 to adjust a liquid amount from two or more cleaning nozzles. When adjusting a liquid amount from a plurality of cleaning nozzles, it is desirable to execute an adjustment in advance such that liquid amounts discharged from the cleaning nozzles are approximately the same by making flow path configurations from the probe cleaner supply pump 208 to the cleaning nozzles the same or by providing an adjustment valve in each flow path.

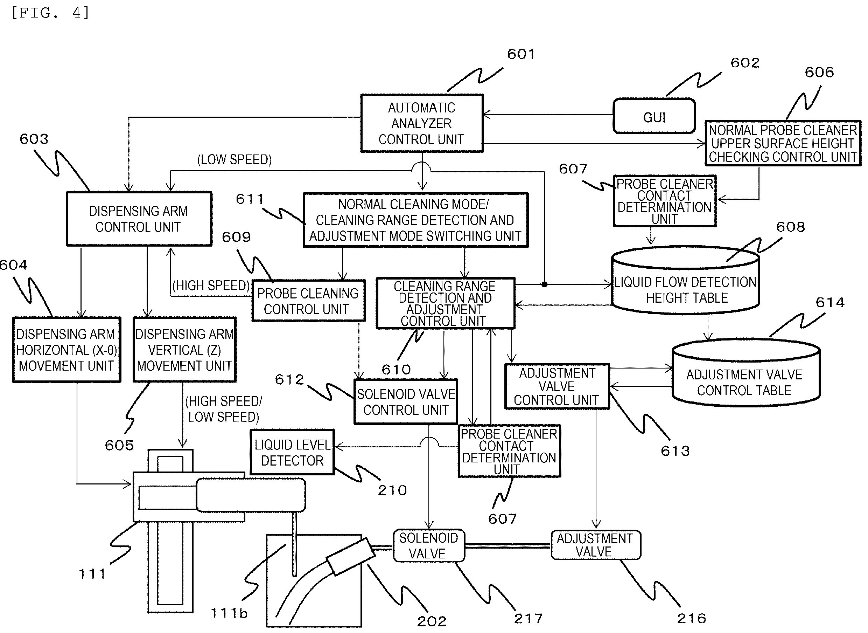

Next, configurations of mechanisms related to cleaning and control systems thereof will be described with reference to FIG. 4. FIG. 4 is a diagram illustrating a configuration example of a control block for probe cleaning and probe cleaner liquid amount adjustment.

An automatic analyzer control unit 601 is a part in the controller 118, which is a central processing unit for controlling the entire analyzer. The automatic analyzer control unit 601 according to the present embodiment obtains height information of an upper surface of the probe cleaner based on data of a capacitance measured by the liquid level detector 210 at a horizontal position in the cleaning position where the sample dispensing probe 111b is to be cleaned, obtains a cleaning range of the sample dispensing probe 111b at the horizontal position based on the height information of the upper surface of the probe cleaner, and determines, based on the obtained cleaning range, whether it is necessary to adjust the liquid amount of the probe cleaner by the flow rate adjustment unit. Details will be described below. The automatic analyzer control unit 601 is preferably an execution subject of a step of obtaining the height information of the upper surface of the probe cleaner, a step of obtaining the cleaning range, and a step of determining whether it is necessary to adjust the liquid amount of the probe cleaner.

The automatic analyzer control unit 601 receives a command such as a test instruction from a user via a GUI 602. The dispensing mechanism positions the sample dispensing probe 111b in response to an instruction from a dispensing arm control unit 603 to a dispensing arm horizontal movement unit 604 or a dispensing arm vertical movement unit 605.

At the time of installation or the like, the normal probe cleaner upper surface height checking control unit 606 detects, via the probe cleaner contact determination unit 607, a probe cleaner upper surface height in a state in which the cleaning range of the sample dispensing probe 111b is checked to be normal, and stores the acquired height information in a liquid flow detection height table 608. In FIG. 4, two probe cleaner contact determination units 607 are illustrated for convenience of illustration.

When acquiring a probe cleaner surface height during checking of a probe cleaner upper surface height (when detecting an upper end position of the probe cleaner by liquid level detection at the horizontal position at the time of cleaning), the sample dispensing probe 111b is lowered at a lower speed than speed at the time of the cleaning operation, and the probe cleaner upper surface height can be acquired by the liquid level detection with high accuracy.

In an operation at the time of an analysis, a cleaning process is executed by moving the sample dispensing probe 111b to the cleaning position in response to an instruction from a probe cleaning control unit 609. If a position of the tip of the sample dispensing probe 111b at this time is a position of a cleaning horizontal position height 502, in an operation during cleaning range checking and adjustment, the position of the tip of the sample dispensing probe 111b is moved to a position of a probe cleaner upper surface detection height 503 or a height with a margin 504 stored in the liquid flow detection height table 608 in response to an instruction from a cleaning range detection and adjustment control unit 610 to execute a cleaning range detection process. Switching between an analysis and a liquid amount adjustment is executed by a normal cleaning mode/cleaning range detection and adjustment mode switching unit 611.

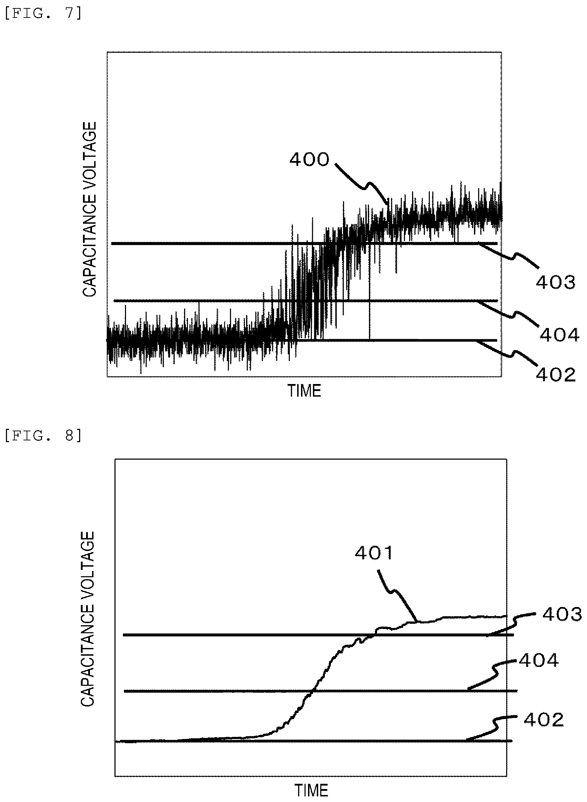

The opening/closing of the adjustment valve 216 for discharging the probe cleaner is executed by a solenoid valve control unit 612, and cleaning water is discharged at any time during probe cleaning or during liquid amount detection and adjustment. A detection signal is determined by the probe cleaner contact determination unit 607 (a processing content is illustrated in FIGS. 7 and 8) and the cleaning range detection and adjustment control unit 610.

The cleaning range detection and adjustment control unit 610 determines whether it is necessary to control the adjustment valve 216 (whether it is necessary to adjust the liquid amount of the probe cleaner by the adjustment valve 216) and a control amount (an opening degree of the adjustment valve 216) based on the height information of the upper surface obtained by the probe cleaner contact determination unit 607. An opening/closing state of the adjustment valve 216 is controlled by changing a control output from the adjustment valve control unit 613. The control output when the adjustment valve 216 is controlled and information of a liquid flow height measured at that time are managed in the adjustment valve control table 614, and can be referred to the next and subsequent times when the adjustment valve 216 is controlled, thereby making it possible to bring the liquid amount of the probe cleaner to a target state with fewer operations.

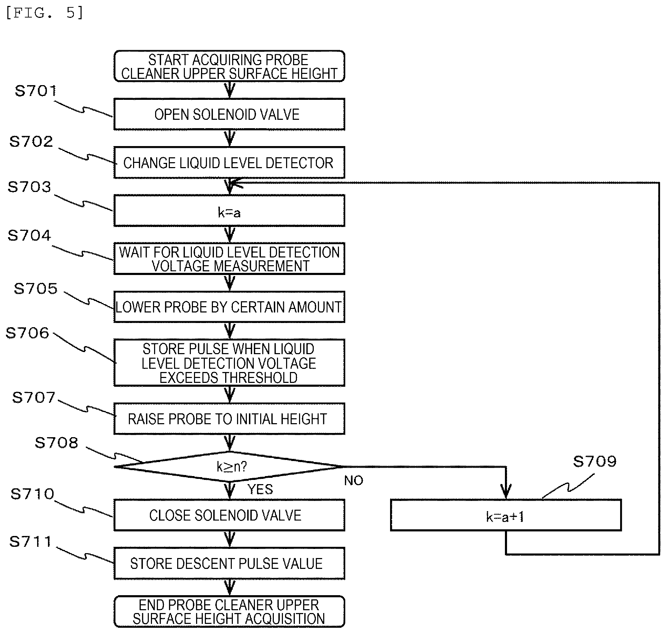

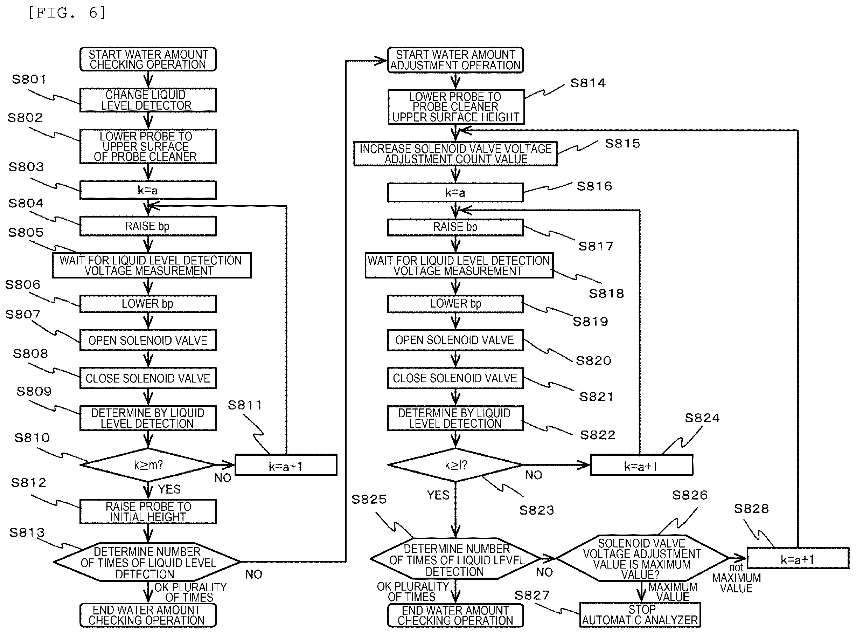

FIG. 5 is a flowchart illustrating an operation when checking the probe cleaner upper surface detection height 503 when the cleaning range is normal, which will be described later. In the above-described flowchart, at the timing when the cleaning range is in a normal state, such as at the time of installation, the probe cleaner upper surface height at the horizontal position of the probe cleaning is acquired as a reference value for checking the cleaning range. The operation is executed in a state in which the sample dispensing probe 111b is positioned at a cleaning horizontal position 501 to be described later. Steps of a flow in FIG. 5 and steps of a flow in FIG. 6 to be described later are mainly executed by the units illustrated in FIG. 4, that is, the controller 118.

First, the discharge of the probe cleaner is started by an opening operation (S701) of the solenoid valve 217.

Thereafter, the liquid level detector 210 is changed to a microcomputer that can execute the smoothing (S702). A number k = a is given such that repetition can be executed a plurality of times (S703).

Thereafter, the automatic analyzer control unit 601, which is triggered by a descent pulse of the sample dispensing probe 111b (= uses the descent pulse as a trigger), starts waiting for liquid level detection voltage measurement (S704).

Thereafter, the sample dispensing probe 111b is lowered at a lower speed than in a normal movement operation (S705). By lowering the sample dispensing probe 111b at a low speed, the liquid level detector 210 is prevented from erroneously detecting a contact detection signal with the probe cleaner, and a resolution of the descent pulse becomes finer, thereby reducing detection variation in an upper end position of the probe cleaner. At the time of lowering, a sensor signal is captured, it is determined whether a signal value exceeds a liquid detection threshold, and the descent pulse when the signal value exceeds the threshold is recorded as a detection height (S706).

Thereafter, the probe is raised to an initial height (S707) to prepare for the next operation. The operations of S703 to S707 are repeated a plurality of times (S708 and S709). As described above, it is desirable to acquire the height information of the upper surface of the probe cleaner a plurality of times and obtain the cleaning range based on the height information of the upper surface of the probe cleaner acquired the plurality of times.

After repeating the operations the plurality of times, the solenoid valve 217 is closed (S710). Thereafter, an averaged descent pulse is stored as an adjustment value (S711), and a probe cleaner upper surface height acquisition process ends.

FIG. 6 is a flowchart illustrating an operation of adjusting the probe cleaner liquid amount when the cleaning range is checked and it is determined that the cleaning range is insufficient. The operation is executed in a state in which the sample dispensing probe 111b is positioned at a cleaning horizontal position 501.

As illustrated in FIG. 6, first, at the start of a water amount checking operation, the liquid level detector 210 is changed to a microcomputer that can execute the smoothing (S801).

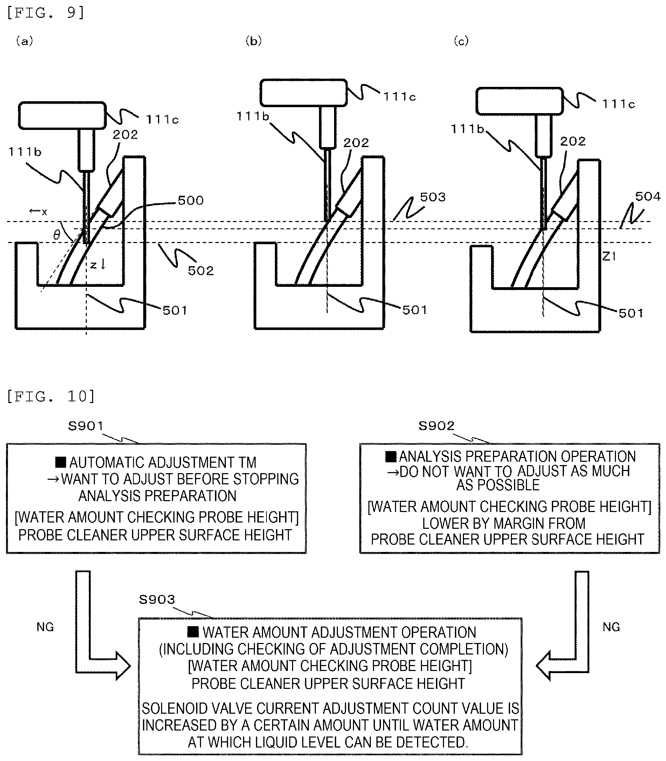

Thereafter, the sample dispensing probe 111b is lowered to the probe cleaner upper surface detection height 503 acquired in advance as an adjustment value (S802). By setting the height with a margin 504 for adding a descent corresponding to the margin when moving the sample dispensing probe 111b to the above-described probe cleaner upper surface height, it is also possible to determine a cleaning range to be ensured and add a margin to a range until a state where an adjustment is executed is reached. FIG. 10, which will be described later, illustrates an example of a flow of manipulating ease of adjustment initiation by adding a margin to the cleaning range.

Next, a number k = a is given such that the cleaning range can be repeated a plurality of times (S803). Thereafter, without changing the height, bp is raised in advance to output a descent pulse that is a trigger for starting liquid level detection voltage acquisition (S804).

Thereafter, the automatic analyzer control unit 601, which is triggered by the descent pulse of the sample dispensing probe 111b, starts waiting for liquid level detection voltage measurement (S805).

Thereafter, bp is lowered to output a descent pulse serving as a trigger to the automatic analyzer control unit 601 (S806). After lowering bp, the sensor signal is captured for a certain period of time. Time for capturing the sensor signal at this time ensures time during which a water flow is stabilized after the solenoid valve 217 is opened. Thereafter, the solenoid valve 217 is opened for a certain period of time (S807). After the probe cleaner is discharged until it is sufficiently stabilized, the solenoid valve 217 is closed (S808).

Thereafter, presence or absence of the probe cleaner is determined by ON/OFF of liquid level detection at the probe cleaner upper surface detection height 503 (S809). Thereafter, in order to reduce a risk of erroneous detection, the above-described processes of S804 to S809 are repeated a plurality of times (S810 and S811). As described above, similarly to S708 and S709, it is desirable to acquire the height information of the upper surface of the probe cleaner a plurality of times and obtain the cleaning range based on the height information of the upper surface of the probe cleaner acquired the plurality of times.

After the above-described processes of S804 to S809 are repeated the plurality of times, the sample dispensing probe 111b is raised to the initial height (S812). Then, the cleaning range is determined as OK or not based on the plurality of times of liquid level detection (S813). If the cleaning range is determined as OK, the confirmation operation ends. If the cleaning range is determined as NG, a water amount adjustment operation ends.

When it is determined that water amount adjustment is necessary, the sample dispensing probe 111b is lowered to the probe cleaner upper surface detection height 503 acquired in advance as the adjustment value (S814).

Thereafter, the flow rate is increased by increasing a new voltage adjustment value of the adjustment valve 216 by a certain amount from a voltage adjustment value used at the present time (S815).

Time used for an adjustment is shortened by increasing a count value from the voltage adjustment value that is being used. In addition, an amount by which the adjustment value is increased at once is determined by taking into consideration that if a count number is too small, a change in the flow rate is small, and it takes time to adjust the flow rate, and if the count value is too large, an opening degree of a proportional solenoid valve is also limited, and it is impossible to quickly adjust the solenoid valve. In this way, it is desirable to increase the opening degree of the adjustment valve 216 in a unit larger than a set minimum unit.

After that, a number k = a is given such that repetition can be executed a plurality of times (S816). Thereafter, without changing the height, bp is raised in advance to output a descent pulse that is a trigger for starting liquid level detection voltage acquisition (S817).

Thereafter, the automatic analyzer control unit 601, which is triggered by the descent pulse of the sample dispensing probe 111b, starts waiting for liquid level detection voltage measurement (S818).

Thereafter, bp is lowered to output a descent pulse serving as a trigger to the automatic analyzer control unit 601 (S819). After lowering bp, the sensor signal is captured for a certain period of time. Time for capturing the sensor signal at this time ensures time during which a water flow is stabilized after the solenoid valve 217 is opened. Thereafter, the solenoid valve 217 is opened for a certain period of time (S820). After the probe cleaner is discharged until it is sufficiently stabilized, the solenoid valve 217 is closed (S821).

Thereafter, the presence or absence of the probe cleaner is determined by ON/OFF of the liquid level detection at the probe cleaner upper surface detection height 503 (S822). Thereafter, in order to reduce a risk of erroneous detection, the above-described processes of S817 to S822 are repeated a plurality of times (S823 and S824). As described above, similarly to S708 and S709, and S810 and S811, it is desirable to acquire the height information of the upper surface of the probe cleaner a plurality of times and obtain the cleaning range based on the height information of the upper surface of the probe cleaner acquired the plurality of times.

Then, the cleaning range is determined as OK or not based on the plurality of times of liquid level detection (S825). If the cleaning range is determined as OK a plurality of times, the water amount adjustment operation ends. On the other hand, if the cleaning range is determined as NG, it is checked whether a solenoid valve voltage adjustment value has a maximum value (S826).

If it is determined in S826 that the maximum value is included, the automatic analyzer is stopped because an adjustment is impossible (S827). In contrast, when it is determined that the maximum value is not included, a solenoid valve adjustment count value is increased again (S828), the process returns to the above-described S815 to increase the voltage adjustment value, and the water amount adjustment operation of S816 to S822 is repeated.

Here, "n" in S708 of FIG. 5, "m" in S810 of FIG. 6, and "l" in S823, which are each a determination reference value of the number of repetitions, may vary according to a status of the automatic analyzer when a probe cleaner upper surface detection process is executed, such as during maintenance and during the analysis. For example, in order to reduce analysis interruption, the number of repetitions may be appropriately set to be different, for example, the number of repetitions during the analysis may be set to be smaller than the number of repetitions during the maintenance having a margin of time.

FIGS. 7 and 8 are each a diagram illustrating smoothing and a threshold regarding a capacitance voltage used for the probe cleaner detection based on ON/OFF of the liquid level detection of S706, S809, and S822. FIG. 7 illustrates raw data 400 of a capacitance voltage value when the sample dispensing probe 111b comes into contact with the probe cleaner from the atmosphere at a low speed, and FIG. 8 illustrates smoothed data 401 obtained by smoothing the capacitance voltage value when the sample dispensing probe 111b comes into contact with the probe cleaner from the atmosphere at the low speed. A horizontal axis represents time [ms], and a vertical axis represents capacitance voltage [V].

The term "smoothing" in the invention refers to obtaining an average of a certain range of the acquired raw data 400 as one point, and executing this process of obtaining the average on the raw data 400 within a required range.

In the raw data 400 of the capacitance voltage value illustrated in FIG. 7, it is illustrated that the probe cleaner has a property of fluctuating due to an influence of gravity or the like, and scattering or the like of the probe cleaner also affects the capacitance. As illustrated in FIG. 7, in the raw data 400 of the capacitance voltage value, when the threshold is set to a low value, there is a high risk of erroneous detection when the capacitance voltage value temporarily increases, and therefore, it is necessary to set the threshold significantly large in order to detect a height at which the probe actually comes into contact with the probe cleaner.

The above-described threshold is a threshold determined for smoothing the capacitance voltage value, and when determining a threshold for detecting contact of the probe cleaner with the sample dispensing probe 111b in the raw data 400, it is necessary to set a raw data threshold 403 larger than the smoothed threshold, and it is conceivable that a risk of erroneous detection due to liquid level fluctuation can be reduced.

Therefore, as indicated by the smoothed data 401 obtained by smoothing the capacitance voltage value in FIG. 8, it can be seen that the influence of the fluctuation or scattering of the probe cleaner can be further reduced in a graph of the smoothed capacitance voltage value with respect to the capacitance voltage value in the raw data 400. It is desirable to compare the raw data with the graph after smoothing described above and determine that the probe cleaner can be detected more accurately by smoothing, and then execute the smoothing.

Further, when smoothing is executed, the threshold is set to a smoothed threshold 404 that is increased by a certain amount from a reference capacitance voltage value 402. This value is a lower value than the raw data threshold 403. The smoothed threshold 404 may be set at a rising position of the graph. By setting the smoothed threshold 404 at the rising position of the graph, a change rate of a capacitance potential during liquid level detection is large with respect to a probe lowering time at a constant liquid level detection time, and therefore, variation in the descent pulse for determining that the liquid level is detected can be reduced.

In this way, the controller 118 can smooth the capacitance data at predetermined intervals, acquire waveform data, and detect contact of the sample dispensing probe 111b with the probe cleaner based on the acquired waveform data, and can also detect the contact of the sample dispensing probe 111b with the probe cleaner based on a comparison between a change in the waveform data within a predetermined time after the sample dispensing probe 111b is positioned at a predetermined height in the horizontal position and a predetermined threshold.

During the cleaning range checking and adjustment, the detection of the probe cleaner is checked a plurality of times at the probe cleaner upper surface height while the sample dispensing probe 111b is waiting. At this time, if droplets of the probe cleaner remain attached to the sample dispensing probe 111b, an initial value of the capacitance voltage increases in advance. Even in the above-described situation, by setting the threshold low, the capacitance voltage of the probe cleaner exceeds the threshold when the probe comes into contact with the probe cleaner, and erroneous detection can be minimized.

FIG. 9 is a diagram illustrating the height of the sample dispensing probe 111b at the cleaning horizontal position 501 acquired in FIG. 5. Using the acquired probe cleaner upper surface height, the sample dispensing probe 111b is moved to the probe cleaner upper surface height in S802 and S814. (a) of FIG. 9 illustrates the cleaning horizontal position height 502 when the sample dispensing probe 111b is cleaned, (b) of FIG. 9 illustrates the probe cleaner upper surface detection height 503 at which the liquid level detection is executed for the upper surface of the probe cleaner, and (c) of FIG. 9 illustrates the height with a margin 504, which is lower by the margin than the probe cleaner upper surface detection height 503 at which the liquid level detection is executed for the upper surface of the probe cleaner.

(a) of FIG. 9 illustrates a position of the sample dispensing probe 111b when the sample dispensing probe 111b is cleaned, and a lowering operation for checking the cleaning range is executed at the horizontal position at this time as illustrated in (b) and (c) of FIG. 9 to be described later.

As illustrated in (b) of FIG. 9, when checking the liquid amount of the probe cleaner 500, the automatic analyzer control unit 601 lowers the sample dispensing probe 111b from above the liquid surface at a low speed, detects the cleaning horizontal position height 502, and acquires height information. Thereafter, a height position of the probe is moved to a probe cleaner flow height using the acquired height information. The liquid level detection is executed at that position to determine presence or absence of the cleaning water.

During an automatic adjustment, the detection is executed at the probe cleaner upper surface detection height 503 at which the upper surface of the probe cleaner is detected, and during the analysis, the liquid level detection is executed at the height with a margin 504, which is lower by the margin than the height for detecting the upper surface of the probe cleaner and at which an adjustment is difficult. In this way, it is possible to set two (the probe cleaner upper surface detection height 503 and the height with a margin 504) or more thresholds, each serving as a reference for detecting the contact of the sample dispensing probe 111b with the probe cleaner.

A direction of the probe cleaner discharged from the cleaning nozzle 202 is not necessarily the same as that in FIG. 9 because the liquid flow draws a parabola due to gravity even when the probe cleaner is discharged obliquely upward from below.

Here, the probe cleaner has a property of fluctuating due to the influence of gravity or the like, and splashing (scattering) of the probe cleaner is likely to occur. Therefore, a lowering distance (detection distance) of the sample dispensing probe 111b may vary greatly. Therefore, in a cleaning unit according to the present embodiment, a speed at which the sample dispensing probe 111b is lowered when checking the probe cleaner upper surface height (lowering detection distance) is set smaller than a speed at which the sample dispensing probe 111b is lowered during cleaning.

In this way, by setting the lowering speed of the sample dispensing probe 111b smaller than speed during cleaning, a resolution of the lowering operation becomes finer, a resolution during smoothing also becomes finer, and variation in a detection position is prevented, so that detection accuracy can be further improved.

Next, effects of the present embodiment will be described.

The automatic analyzer 100 according to Embodiment 1 of the invention described above includes the sample dispensing probe 111b that dispenses the sample or the reagent dispensing probe 120 that dispenses the reagent, the cleaning nozzle 202 that discharges the probe cleaner to an outer wall of the sample dispensing probe 111b or the reagent dispensing probe 120, the flow rate adjustment unit that adjusts the liquid amount of the probe cleaner discharged from the cleaning nozzle 202, the liquid level detector 210 that measures the capacitance of the sample dispensing probe 111b or the reagent dispensing probe 120, and the controller 118. The controller 118 obtains the height information of the upper surface of the probe cleaner based on the data of the capacitance measured by the liquid level detector 210 at the horizontal position in the cleaning position where the sample dispensing probe 111b or the reagent dispensing probe 120 is to be cleaned, obtains the cleaning range of the sample dispensing probe 111b or the reagent dispensing probe 120 at the horizontal position based on the height information of the upper surface of the probe cleaner, and determines, based on the obtained cleaning range, whether it is necessary to adjust the liquid amount of the probe cleaner by the flow rate adjustment unit.

Accordingly, since it is possible to determine whether a discharge height of the probe cleaner, that is, the cleaning range is appropriate at the horizontal position where an actual cleaning operation is to be executed, it is possible to eliminate an influence of the inclination of the probe cleaner or the like, and therefore, it is possible to determine whether the cleaning range is appropriate even when the above-described machine difference such as the manufacturing error occurs, and it is possible to ensure the cleaning range without being affected by the machine difference. Therefore, the adjustment for appropriately maintaining the cleaning range can be automatically executed.

In addition, since the controller 118 smoothens the data of the capacitance at predetermined intervals, acquires the waveform data, and detects the contact of the sample dispensing probe 111b with the probe cleaner based on the acquired waveform data, an influence of a variation in the acquired data can be reduced, and thus it is possible to determine whether the probe cleaner is in contact with the sample dispensing probe 111b with higher accuracy, so that the detection accuracy of the cleaning range is further improved, and the cleaning range can be made more appropriate.

Further, the controller 118 detects the contact of the sample dispensing probe 111b with the probe cleaner based on a comparison between a change in the waveform data within a predetermined time after the sample dispensing probe 111b is positioned at a predetermined height in the horizontal position and a preset threshold, so that the threshold can be set at a lower position and the threshold can be set at the rising position of the graph as compared with the case of the raw data 400, and thus a change rate of a liquid level detection potential with respect to the probe lowering time increases and the error in the height detection decreases. That is, the detection accuracy of the cleaning range can be further improved.

In addition, the controller 118 lowers the sample dispensing probe 111b at a speed lower than speed during a cleaning operation when acquiring the height information of the upper surface, so that the height information can be subdivided more precisely, and checking accuracy of the cleaning range can be further improved.

Furthermore, since the ease of adjustment initiation can be controlled by setting two or more thresholds, the checking operation of the cleaning range can be executed according to a situation at the time of checking, and it is possible to avoid an influence on the start of an analysis or the like.

Further, the flow rate adjustment unit is the adjustment valve 216 that can adjust the liquid amount of the probe cleaner, and the controller 118 can easily adjust the flow rate by adjusting the opening degree of the adjustment valve 216 based on the height information of the upper surface.

Further, by increasing the opening degree of the adjustment valve 216 in a unit larger than the set minimum unit, time required to adjust the flow rate of the probe cleaner can be shortened.

In addition, the controller 118 acquires the height information of the upper surface of the probe cleaner the plurality of times, and obtains the cleaning range based on the height information of the upper surface of the probe cleaner acquired the plurality of times, so that it is possible to reduce detection errors of the cleaning range due to erroneous detection, and to contribute to implementing more appropriate cleaning.

Further, by setting the number of times the height information of the upper surface of the probe cleaner is acquired the plurality of times different depending on a timing at which the height information of the upper surface of the probe cleaner is acquired, the checking operation of the cleaning range can be executed according to a situation at the time of checking.

### <Embodiment 2>

An automatic analyzer and a method for adjusting the automatic analyzer according to Embodiment 2 of the invention will be described with reference to FIG. 10. FIG. 10 is a diagram illustrating a cleaning range checking height and a flow in each operation.

FIG. 10 illustrates a height position at which a probe cleaner 500 is checked by the sample dispensing probe 111b during each operation.

As illustrated in FIG. 10, during an automatic adjustment (S901) which is periodic maintenance, the probe cleaner is checked at the upper surface of the probe cleaner (the probe cleaner upper surface detection height 503 in FIG. 9), whereas during an analysis (S902), the cleaning water is checked at a position (the height with a margin 504 in FIG. 9) that is lower by the margin with respect to the probe cleaner upper surface height. This is a method for manipulating the cleaning range to be ensured.

In the automatic analyzer 100, since a test is stopped when the automatic analyzer is stopped during an analysis, an adjustment is executed in advance at the time of the automatic adjustment during maintenance as much as possible. However, when the cleaning range according to specification is not satisfied, analysis performance is affected, and thus the cleaning range is also checked at the time of analysis preparation. When it is determined that cleaning determination is not appropriate and an adjustment operation is started, the probe cleaner is checked on the upper surface of the probe cleaner (S903). The above-described operation is executed to return the cleaning range to an initial state.

Other configurations and operations are substantially the same as the configurations and the operations of the automatic analyzer and the method for adjusting the automatic analyzer according to Embodiment 1 described above, and details thereof will be omitted.

The automatic analyzer and the method for adjusting the automatic analyzer according to Embodiment 2 of the invention have substantially the same effects as those of the automatic analyzer and the method for adjusting the automatic analyzer according to Embodiment 1 described above.

### <Others>

The invention is not limited to the above-described embodiments, and includes various modifications. The above-described embodiments have been described in detail to facilitate understanding of the invention, and the invention is not necessarily limited to those including all the configurations described above.

A part of a configuration in one embodiment can be replaced with a configuration in another embodiment, and a configuration in one embodiment can also be added to a configuration in another embodiment. Another configuration may be added to a part of a configuration in each embodiment, and a part of a configuration in each embodiment may also be deleted or replaced with another configuration.

### Reference Signs List

100: automatic analyzer
101: reaction disk
102: reaction container
103: cleaning mechanism
104: spectrophotometer
105: stirring mechanism
106: cleaning tank
107: first reagent dispensing mechanism
107a: second reagent dispensing mechanism
108: cleaning tank (for reagent dispensing mechanism)
109: reagent disk
110: reagent bottle
111: first sample dispensing mechanism
111a: second sample dispensing mechanism
111b: sample dispensing probe (dispensing probe)
111c: sample dispensing arm
111d: horizontal movement mechanism
111e: vertical movement mechanism
112: detergent bottle
113: cleaning tank (for sample dispensing mechanism)
115: sample container
116: sample rack
117: sample transport mechanism
118: controller
120: reagent dispensing probe (dispensing probe)
121: reagent syringe
122: sample syringe
202: cleaning nozzle
208: probe cleaner supply pump
210: liquid level detector (capacitance measurement unit)
216: adjustment valve (flow rate adjustment unit)
217: solenoid valve
218: flow path
219: waste liquid tank
400: raw data of capacitance voltage value
401: smoothed data of capacitance voltage value
402: reference capacitance voltage value
403: raw data threshold
404: smoothed threshold
500: probe cleaner
501: cleaning horizontal position
502: cleaning horizontal position height
503: probe cleaner upper surface detection height
504: height with margin
601: automatic analyzer control unit
602: GUI
603: dispensing arm control unit
604: dispensing arm horizontal movement unit (X-θ)
605: dispensing arm vertical movement unit (Z)
606: normal probe cleaner upper surface height checking control unit
607: probe cleaner contact determination unit
608: liquid flow detection height table
609: probe cleaning control unit
610: cleaning range detection and adjustment control unit
611: normal cleaning mode/cleaning range detection and adjustment mode switching unit
612: solenoid valve control unit
613: adjustment valve control unit
614: adjustment valve control table

## Claims

1. An automatic analyzer comprising:
a dispensing probe configured to dispense a liquid;
a cleaning nozzle configured to discharge a probe cleaner to an outer wall of the dispensing probe;
a flow rate adjustment unit configured to adjust a liquid amount of the probe cleaner discharged from the cleaning nozzle;
a capacitance measurement unit configured to measure a capacitance of the dispensing probe; and
a control unit, wherein
the control unit
obtains height information of an upper surface of the probe cleaner based on data of the capacitance measured by the capacitance measurement unit at a horizontal position in a cleaning position where the dispensing probe is to be cleaned,
obtains a cleaning range of the dispensing probe at the horizontal position based on the height information of the upper surface of the probe cleaner, and
determines, based on the obtained cleaning range, whether it is necessary to adjust the liquid amount of the probe cleaner by the flow rate adjustment unit.

2. The automatic analyzer according to claim 1, wherein
the control unit smoothens the data of the capacitance at predetermined intervals, acquires waveform data, and detects contact of the dispensing probe with the probe cleaner based on the acquired waveform data.

3. The automatic analyzer according to claim 2, wherein
the control unit detects the contact of the dispensing probe with the probe cleaner based on a comparison between a change in the waveform data within a predetermined time after the dispensing probe is positioned at a predetermined height in the horizontal position and a preset threshold.

4. The automatic analyzer according to claim 3, wherein
the control unit lowers the dispensing probe at a speed lower than speed during a cleaning operation when acquiring the height information of the upper surface.

5. The automatic analyzer according to claim 3, wherein
two or more thresholds are set.

6. The automatic analyzer according to claim 3, wherein
the flow rate adjustment unit is an adjustment valve configured to adjust the liquid amount of the probe cleaner, and
the control unit adjusts an opening degree of the adjustment valve based on the height information of the upper surface.

7. The automatic analyzer according to claim 6, wherein
the opening degree of the adjustment valve is increased in a unit larger than a set minimum unit.

8. The automatic analyzer according to claim 1, wherein
the control unit acquires the height information of the upper surface of the probe cleaner a plurality of times, and obtains the cleaning range based on the height information of the upper surface of the probe cleaner acquired the plurality of times.

9. The automatic analyzer according to claim 8, wherein
the number of times the height information of the upper surface of the probe cleaner is acquired the plurality of times is set differently depending on a timing at which the height information of the upper surface of the probe cleaner is acquired.

10. A method for adjusting an automatic analyzer, the automatic analyzer including a dispensing probe configured to dispense a liquid, a cleaning nozzle configured to discharge a probe cleaner to an outer wall of the dispensing probe, a flow rate adjustment unit configured to adjust a liquid amount of the probe cleaner discharged from the cleaning nozzle, and a capacitance measurement unit configured to measure a capacitance of the dispensing probe, the method comprising:
a step of obtaining height information of an upper surface of the probe cleaner based on data of the capacitance measured by the capacitance measurement unit at a horizontal position in a cleaning position where the dispensing probe is to be cleaned;
a step of obtaining a cleaning range of the dispensing probe at the horizontal position based on the height information of the upper surface of the probe cleaner; and
a step of determining, based on the obtained cleaning range, whether it is necessary to adjust the liquid amount of the probe cleaner by the flow rate adjustment unit.
